# FASCICULE DE BREVET EUROPEEN

(11) **EP 2 579 611 B1**
(45) Date de publication et mention de la délivrance du brevet: **25.04.2018**
(21) Numéro de dépôt: 12187037.2
(22) Date de dépôt: 02.10.2012
(51) Int. Cl.: H04Q 9/00, G01D 4/00, H04B 3/54

(54) **PROCÉDÉ DE LOCALISATION DE POINTS CONSOMMATEURS DE COURANT DANS UN SYSTÈME DE DISTRIBUTION DE COURANT ÉLECTRIQUE, DISPOSITIF DE TRAITEMENT, CAPTEUR DE COURANT ET COMPTEUR DE COURANT ASSOCIÉS**
VERFAHREN ZUR LOKALISIERUNG VON STROMENTNAHMEPUNKTEN IN EINEM STROMVERTEILUGSSYSTEM, ENTSPRECHENDE DATENVERARBEITUNGSVORRICHTUNG, ENTSPRECHENDER STROMABNEHMER UND STROMZÄHLER
METHOD FOR LOCATING CURRENT CONSUMER POINTS IN AN ELECTRICAL CURRENT DISTRIBUTION SYSTEM, PROCESSING DEVICE, CURRENT SENSOR AND ASSOCIATED CURRENT METER

(30) Priorité: 03.10.2011 FR 1158918
(43) Date de publication de la demande: 10.04.2013
(73) Titulaire: Schneider Electric Industries SAS, 92500 Rueil-Malmaison (FR)
(72) Inventeur: Clemence, Michel, 73000 Chambery (FR); Contini, Erick, 38240 Meylan (FR); Coutelou, Olivier, 38000 Grenoble (FR); Waterlot, Frédéric, 73190 ST Baldoph (FR)
(74) Mandataire: Lavoix

(56) Documents cités:
- EP-A1- 1 669 767
- WO-A2-2011/002843
- CA-A1- 2 527 068
- US-A1- 2011 122 798

## Description

La présente invention concerne les systèmes de distribution de courant électrique depuis un noeud central à destination de points consommateurs de courant associés chacun à au moins une charge électrique. Dans ces systèmes de distribution, des câbles de courant respectifs connectent chaque point consommateur au noeud central. Dans des cas, un compteur de courant respectif disposé au niveau de chaque point consommateur est adapté pour mesurer l'énergie consommée par le point consommateur associé.

Le noeud central est par exemple un poste, dit poste MT/BT, interfacé entre le réseau de distribution à moyenne tension (MT) et le réseau de distribution basse tension (BT) auquel les utilisateurs domestiques sont raccordés.

Les réseaux BT sont denses, parfois enterrés, mixant des matériels et des câbles d'âge variable. Dans certains cas, ils sont exploités par des régies d'électricité distinctes, et ont pu faire l'objet de modifications, d'extensions et de réparations, parfois disparates, sans que ces événements aient été tracés, ni répertoriés.

Ainsi la constitution effective des réseaux BT est parfois inconnue. Notamment, il n'est pas toujours possible de faire le lien entre un câble au départ du poste MT/BT et un compteur de courant associé à un point consommateur. Cette méconnaissance de la structure précise des réseaux BT est la source de problèmes divers. Par exemple, elle donne lieu à une mauvaise estimation de la qualité des liaisons du réseau, à des délais de dépannage importants, à la survenue de déséquilibre entre les puissances consommées par les phases de réseaux triphasés, à une localisation et une caractérisation malaisées des vols d'énergie électrique ou des fraudes.

Le document CA 2 527 068 A1 décrit un appareillage de comptage multivoies, pour mesurer la consommation de plusieurs lignes clients et déconnecter à distance des clients en vue de limiter la charge ou la consommation

La présente invention vise à contribuer à améliorer certains de ces problèmes techniques.

A cet effet, suivant un premier aspect, l'invention a pour objet un procédé de localisation de points consommateurs de courant dans un système de distribution de courant depuis un noeud central N à destination des points consommateurs de courant associés chacun à au moins une charge électrique, des câbles de courant respectifs connectant chaque point consommateur au noeud central, le système de distribution comprenant un module de traitement et les points consommateurs et le module de traitement étant dotés de premiers moyens de télécommunication ;
ledit procédé étant caractérisé en ce qu'il comprend les étapes suivantes, suite à l'installation sur les câbles, de capteurs de courant, chaque capteur de courant étant adapté pour mesurer le courant circulant dans un câble respectif associé;
i/ sélection par le module de traitement d'un point consommateur et transmission par le module de traitement audit point consommateur sélectionné par les premiers moyens de télécommunication, d'une commande d'au moins une opération de connexion(s) et/ou déconnexion(s) du système de distribution à une charge électrique associée au point consommateur sélectionné ;
ii/ mise en oeuvre au niveau du point consommateur sélectionné, sur réception de ladite commande, de l'opération de connexion(s) et/ou déconnexion(s) à ladite charge électrique ;
iii/ sélection parmi les capteurs de courant, en fonction au moins de mesures respectives effectuées par certains au moins desdits capteurs de courant pendant la mise en oeuvre de ladite commande, et en fonction en outre d'un profil-type de variation de courant déterminé en fonction de l'opération commandée, d'au moins un capteur de courant en tant que capteur de courant associé à un câble connectant le noeud central au point consommateur sélectionné.

Un tel procédé permet ainsi de pouvoir identifier à quel câble au départ d'un poste MT/BT, correspond un compteur électrique et/ou un point consommateur, de pouvoir connaître la typologie du réseau BT et d'améliorer en conséquence les opérations de réparation, de maintenance, l'estimation de la qualité des liaisons du réseau BT, la localisation du vol d'énergie, etc.

Dans des modes de réalisation, le procédé de localisation de points consommateurs de courant dans un système de distribution de courant électrique suivant l'invention comporte en outre une ou plusieurs des caractéristiques suivantes :
- on réitère les étapes i/ à iii/ en sélectionnant successivement des points consommateurs distincts ;
- suite à la sélection d'un capteur de courant à l'étape iii/ :
   iv/ on indique, dans une table de correspondance stockée dans des moyens de mémorisation du système de distribution du courant électrique, une correspondance entre :
      - un identifiant du câble associé au capteur sélectionné ; et
      - un identifiant du point consommateur sélectionné ;
- l'opération de connexion(s) et/ou déconnexion(s) est relative à une opération, au niveau du point consommateur sélectionné, de connexion(s) et/ou déconnexion(s) d'une charge électrique dont la puissance est préalablement connue ou estimée connue, et le profil-type de variation de courant déterminé comprend une variation d'amplitude de courant déterminée en fonction de ladite puissance connue ou estimée ;
- l'opération de connexion et/ou déconnexion est relative à une séquence déterminée de trois ou plus étapes de connexion(s) et/ou déconnexion(s) successives d'une charge électrique dans le point consommateur sélectionné ;
- la commande comportant des éléments de définition de la séquence, des séquences différentes étant commandées à des points consommateurs distincts ;
- le point consommateur comprend un commutateur disposé entre la charge électrique et le câble connectant ledit point consommateur, ledit commutateur étant adapté pour mettre en oeuvre la commande ;
- un compteur de courant respectif au niveau d'un point consommateur étant adapté pour s'incrémenter en fonction du courant consommé par ledit point consommateur associé, transmet au module de traitement via les premiers moyens de communications des relevés de consommation électrique par ledit point consommateur associé au compteur ;
- la puissance connue ou estimée est déterminée en fonction d'au moins un desdits relevés reçus par le module de traitement ;
- la technologie des premiers moyens de communication est de type « courants porteurs en ligne » ;
- le module de traitement et les capteurs étant dotés de seconds moyens de communication :
   - le profil-type de variation de courant déterminé est transmis par le module de traitement aux capteurs de courant via lesdits seconds moyens de télécommunication ;
   - chaque capteur de courant détermine en fonction dudit profil-type et d'au moins une mesure effectuée par ledit capteur si ledit capteur est sélectionnable ;
   - si ledit capteur est déterminé comme sélectionnable, il en informe le module de traitement via les seconds moyens de télécommunication.

Suivant un deuxième aspect, l'invention a pour objet un dispositif de traitement d'un système de distribution de courant électrique depuis un noeud central T à destination de points consommateurs de courant connectés audit noeud central par des câbles de courant respectifs, des capteurs de courant étant adaptés pour mesurer le courant circulant dans les câbles, chaque capteur étant associé à un câble respectif, ledit dispositif de traitement étant doté de premiers moyens de télécommunication avec les points consommateurs et étant caractérisé en ce qu'il est adapté pour :
a/ sélectionner un point consommateur et transmettre par les premiers moyens de télécommunication audit point consommateur sélectionné, une commande d'au moins une opération de connexion(s) et/ou déconnexion(s) du système de distribution à une charge électrique associée au point consommateur sélectionné ;
b/ sélectionner parmi les capteurs de courant, en fonction au moins de mesures respectives effectuées par certains au moins desdits capteurs de courant pendant la mise en oeuvre de ladite commande, et en fonction en outre d'un profil-type de variation de courant déterminé en fonction de l'opération commandée, au moins un capteur de courant en tant que capteur de courant associé à un câble connectant le noeud central au point consommateur sélectionné.

Suivant un troisième aspect, l'invention a pour objet un capteur de courant électrique dans un câble de courant et comprenant des moyens de télécommunications et des moyens de traitement, ledit capteur de courant étant adapté pour recevoir d'un dispositif extérieur via les moyens de télécommunication, un profil-type de variation de courant, les moyens de traitement étant adaptés pour déterminer en fonction au moins de mesures de courant si le courant circulant dans le câble correspond au profil -type reçu, et dans le cas positif pour le signaler au dispositif extérieur via les moyens de télécommunication.

L'invention sera mieux comprise à la lecture de la description qui suit et à l'examen des figures qui l'accompagnent. Ces figures sont données à titre illustratif mais nullement limitatif de l'invention. Ces figures sont les suivantes :
- la figure 1 est une vue d'une partie d'un réseau de distribution électrique ;
- la figure 2 est une vue détaillée d'une partie du réseau de distribution électrique représenté en figure 1 ;
- la figure 3 représente une vue d'un d'un point consommateur dans un mode de réalisation de l'invention ;
- la figure 4 représente une vue d'un capteur de courant dans un mode de réalisation de l'invention ;
- la figure 5 est un organigramme d'un procédé dans un mode de réalisation de l'invention ;
- la figure 6 est une vue des variations de l'état de connexion du compteur à la charge en fonction du temps sur un câble donné, et des variations correspondantes du courant à l'autre extrémité du câble.

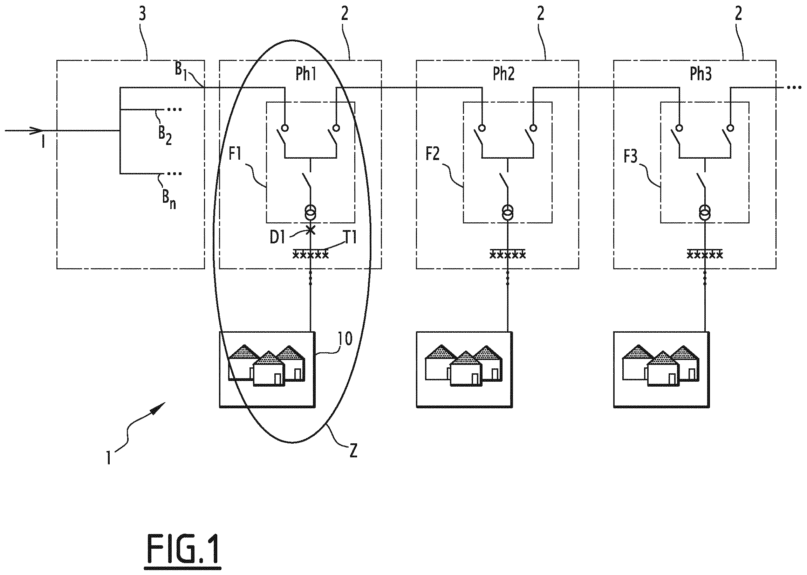

Sur la figure 1, un départ MT (Moyenne Tension) d'un réseau de distribution électrique 1 est représenté schématiquement, comprenant un poste de transformation HT/MT (Haute Tension/Moyenne Tension) 3 doté de plusieurs branches de départ triphasées MT B₁, ... Bₙ.

On va décrire ci-dessous le réseau de distribution MT et BT correspondant à la branche B₁, similaire aux réseaux correspondant aux autres branches.

La branche MT B₁ relie une pluralité de postes de transformation MT/BT (Moyenne Tension/Basse Tension) 2, dont 3 ont été représentés en figure 1.

Typiquement ce nombre de postes de transformation MT/BT 2 est compris entre 3 et 15. Les postes de transformation MT/BT 2 sont disposés entre le réseau de distribution MT et le réseau de distribution BT.

Par exemple, la tension sur les réseaux MT est de 3 à 33 kV et la tension sur les réseaux BT est de 110 V à 600 V.

Ci-dessous le poste de transformation MT/BT 2 et le réseau BT alimenté par ce poste de transformation MT/BT, qui sont situés dans la bulle Z sur la figure 1, vont être décrits. Les autres postes de transformation MT/BT et réseaux BT alimentés par ces postes présentent une structure similaire.

Le poste de transformation MT/BT 2 comprend un transformateur F₁, adapté pour effectuer la conversion de la moyenne tension vers la basse tension, alimenté par la branche MT B₁.

Dans le poste de transformation MT/BT 2, le convertisseur F₁ est suivi d'un noeud D₁ en amont d'un tableau T₁ de répartition.

Ce tableau T₁ répartit, dans le poste de transformation MT/BT 2, le courant reçu au point de départ D₁ sur un certain nombre de départs BT (Basse Tension) triphasés convoyant un courant électrique à destination d'une pluralité de consommateurs 10, monophasés ou triphasés- typiquement entre 20 et 200 consommateurs généralement équipés d'un compteur électrique.

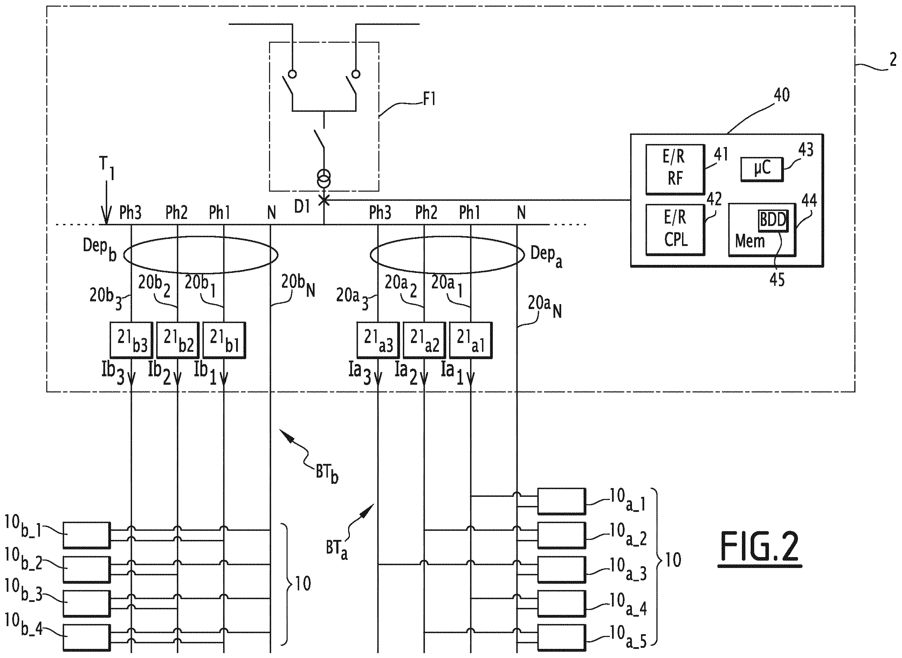

La figure 2 est une vue plus détaillée du poste de transformation MT/BT 2 et du réseau BT alimenté par ce poste de transformation MT/BT 2, qui sont situés dans la bulle Z de la figure 1.

Le tableau de répartition alimente un certain nombre de départ BT triphasés. Typiquement, ce nombre est généralement compris entre 2 et 10. Deux départs triphasés Depₐ et Dep_{b} ont été considérés en référence à la figure 2.

Ainsi du tableau de répartition T₁, pour le départ triphasé Depₐ, quatre câbles monophasés 20ₐ₁, 20ₐ₂, 20ₐ₃, 20_{aN}, correspondant respectivement à la première, deuxième, troisième phases et au neutre en tension, partent à destination de consommateurs 10. Les câbles 20ₐ₁, 20ₐ₂, 20ₐ₃ sont adaptés pour délivrer un courant électrique, respectivement Iₐ₁, Iₐ₂, Iₐ₃ à destination de cette pluralité de consommateurs 10.

Similairement du tableau de répartition T₁, pour le départ triphasé Dep_{b}, quatre câbles monophasés 20_{b1}, 20_{b2}, 20_{b3}, 20_{bN}, correspondant respectivement à la première, deuxième, troisième phases et au neutre en tension, partent à destination de consommateurs respectifs. Les câbles 20_{b1}, 20_{b2}, 20_{b3} sont adaptés pour délivrer un courant électrique, respectivement I_{b1}, I_{b2}, I_{b3} à destination d'une pluralité de consommateurs 10.

Dans le poste MT/BT 2, un dispositif de traitement 40, nommé aussi concentrateur, est relié électriquement au noeud D₁ en amont du tableau de répartition T₁. Le dispositif de traitement 40 comporte un module d'émission/réception radiofréquence 41, un module d'émission/réception CPL (« Courants Porteurs en Ligne») 42, un microcontrôleur 43 et une mémoire 44.

Chaque câble 20_{ai,} 20_{bi} (avec i compris entre 1 et 3) alimente des (entre un et 10) points consommateurs, par exemple une habitation ou un groupe d'habitation, une usine etc, grâce à des dérivations réparties le long du câble.

On considère ici les points consommateurs 10_{a_1}, 10_{a_2}, 10_{a_3}, 10_{a_4}, 10_{a_5}, 10_{b_1}, 10_{b_2}, 10_{b_3}, 10_{b_4}.

Généralement, la répartition des points consommateurs par rapport aux câbles identifiés au départ du poste de transformation MT/BT 2 est inconnue, le lien entre les départs de câbles dans le poste de transformation et les consommateurs n'étant pas évident à faire, puisque dans de nombreux cas, les câbles ont des sections enterrées, ont été modifiés ou dérivés de nombreuses fois etc.

La longueur de ces câbles peut être variée et atteindre 200 mètres.

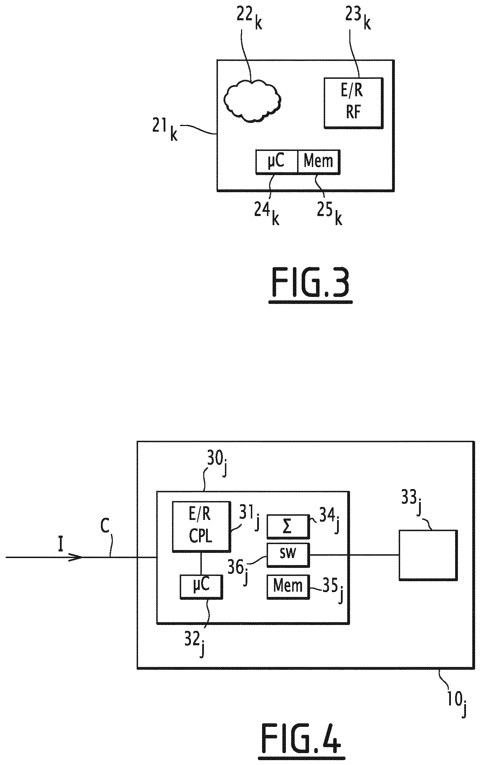

La structure d'un point consommateur 10ⱼ, pour j prenant les valeurs a_1, a_2, a_3, a_4, a_5, b_1, b_2, b_3, b_4, est décrite en référence à la figure 4.

Un point consommateur 10ⱼ comprend un compteur de courant 30ⱼ qui est disposé entre le câble C qui l'alimente (un des câbles parmi les câbles 20ₐ₁, 20ₐ₂, 20ₐ₃, 20_{b1}, 20_{b2}, 20_{b3}) et la charge électrique 33ⱼ qui est la charge électrique réelle du point consommateur 10ⱼ.

Dans le mode de réalisation considéré, le compteur de courant 30ⱼ comporte un module d'émission-réception CPL 31ⱼ, un microcontrôleur 32ⱼ, un module de comptage 34ⱼ électronique ou électromécanique et une mémoire 35ⱼ.

Lorsque la charge 33j consomme du courant I fourni par le câble C alimentant électriquement le point consommateur 10ⱼ, le module de comptage 34ⱼ est adapté pour mesurer l'énergie consommée par la charge 33ⱼ et pour incrémenter en fonction le décompte des unités d'énergie consommées, par exemple exprimé en kilowattheures (kWh).

Dans le mode de réalisation considéré, le compteur 30ⱼ est en outre adapté pour, en fonction d'une commande correspondante reçue, se déconnecter de la charge 33ⱼ et/ou se reconnecter à cette charge 33ⱼ rapidement (en quelques millisecondes), de façon transparente pour le consommateur. Pour ce faire, par exemple, il comporte en outre un commutateur 36ⱼ commandé par le microcontrôleur 32ⱼ.

Dans le mode de réalisation considéré, les compteurs des points consommateurs ou au moins certains d'entre eux, sont adaptés pour transmettre à fréquence régulière, les données de comptage élaborées par le module de comptage à destination du dispositif de traitement 40 par transmission par CPL.

La fréquence peut être par exemple de l'ordre d'une fois par dizaine de minutes, jusqu'à une fois par jour.

Ainsi en référence à un point consommateur 10ⱼ, les données de comptage sont fournies par le module de comptage 34ⱼ au module d'émission/réception CPL 31ⱼ, sous le pilotage du microcontrôleur 32ⱼ. Le module d'émission/réception CPL 31ⱼ prépare alors ces données de manière à les rendre conforme au protocole CPL, puis les transmet sur le câble d'alimentation électrique auquel le point consommateur est relié à destination du module de traitement 40 par CPL.

Pour rappel, le principe des CPL, connu, consiste à superposer au courant électrique alternatif transitant par le câble, un signal électrique de plus haute fréquence et de faible énergie comportant les données à transmettre. Le signal CPL est reçu par tout récepteur CPL qui se trouve sur le même réseau électrique.

Dans un mode de réalisation, le dispositif de traitement 40 reçoit les relevés émis par les différents compteurs reliés au réseau de distribution BT partant du tableau de répartition T₁, les stocke par exemple dans la mémoire 44, puis le cas échéant, effectue une ou plusieurs opérations de concaténation, moyenne etc, avant de les transmettre à son tour le cas échéant à un niveau supérieur du réseau. Les données de comptage en quasi-temps réel de chacun des compteurs sont donc disponibles dans le poste MT/BT 2.

Les signaux CPL émis par les compteurs transmettant les relevés au dispositif de traitement 40 se retrouvent sur le tableau de répartition T₁, et par la suite sur l'ensemble des câbles reliés au tableau de répartition T₁ du poste MT/BT considéré, voire, par diaphonie, sur les câbles BT reliés aux autres postes MT/BT 2 .

La réception de ces signaux par le dispositif de traitement 40 ne permet donc pas de déterminer la répartition des compteurs 30ⱼ, avec j prenant les valeurs a_1, a_2, a_3, a_4, a_5, b_1, b_2, b_3, b_4, sur les câbles 20ₐ₁, 20_{bi} (avec i compris entre 1 et 3) lorsque celle-ci est ignorée.

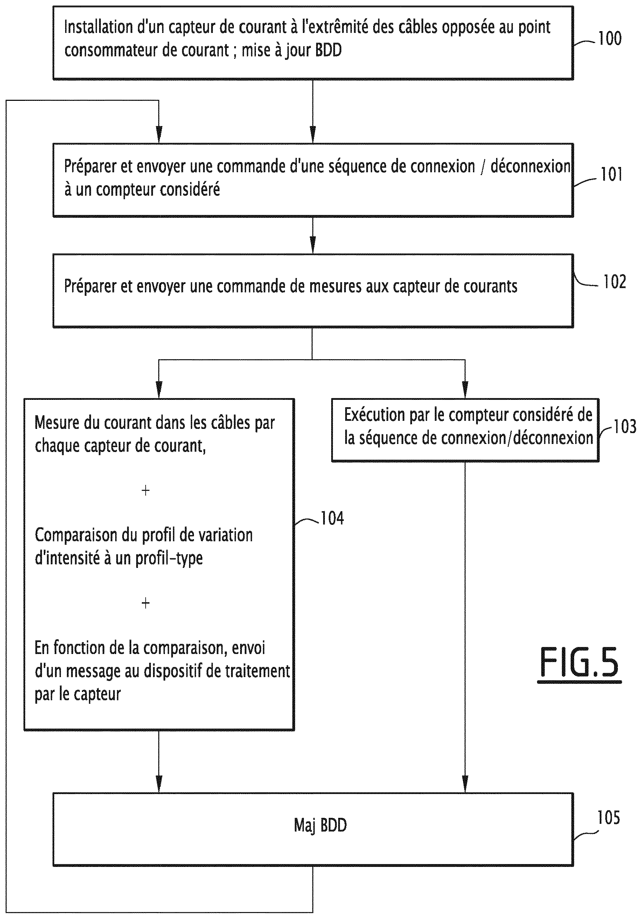

Dans un mode de réalisation de l'invention, et en référence aux figures 2 et 5, un capteur de courant, respectivement 21ₐ₁, 21ₐ₂, 21ₐ₃, 21_{b1}, 21_{b2}, 21_{b3}, est installé sur un câble qui lui est associé, respectivement 20ₐ₁, 20ₐ₂, 20ₐ₃, 20_{b1}, 20_{b2}, 20_{b3}, dans le poste MT/BT 2, au niveau du tableau de répartition T₁ (étape 100).

Comme représenté en détail en figure 3, un capteur de courant 21ₖ avec k prenant les valeurs a1, a2, a3, b1, b2, b3, comporte, dans le mode de réalisation considéré, un élément de mesure du courant 22ₖ, un module d'émission/réception radiofréquence 23ₖ, un microcontrôleur 24ₖ et une mémoire 25ₖ.

L'élément de mesure du courant 22ₖ est par exemple de type capteur ouvrant avec un tore de Rogowsky, qui se clipse autour du câble 20ₖ.

Le capteur de courant 21ₖ est adapté pour mesurer le courant Iₖ passant dans le câble 20ₖ à l'aide de mesures réalisées par l'élément de mesure 22ₖ, et de traitements opérés sur ces mesures suite à l'exécution d'instructions logicielles stockées dans la mémoire 25ₖ sur le microcontrôleur 24ₖ.

Le capteur de courant 21ₖ est en outre adapté pour communiquer avec le dispositif de traitement 40 par l'intermédiaire de leur module d'émission/réception radiofréquence respectif 23ₖ, 41. Le protocole mis en oeuvre pour la communication radiofréquence est par exemple de type ZigBee, Wifi, BlueTooth ou une radio propriétaire. Le capteur de courant 21ₖ est par exemple alimenté par récupération de l'énergie correspondant au courant électrique induit dans l'élément de mesure 22ₖ par le passage du courant dans le câble 20ₖ.

Dans les communications radiofréquences d'une part, et dans les communications CPL d'autre part, le dispositif de traitement 40, les capteurs de courant 21ₐ₁. 21ₐ₂, 21ₐ₃, 21_{b1}, 21_{b2}, 21_{b3} et les compteurs 30_{a_1}, 30_{a_2}, 30_{a_3}, 30_{a_4}, 30_{a_5}, 30_{b_1}, 30_{b_2}, 30_{b_3}, 30_{b_4}, sont identifiés par des adresses respectives.

Dans d'autres modes de réalisation, la communication entre le dispositif de traitement 40 et les capteurs de courant 21ₐ₁, 21ₐ₂, 21ₐ₃, 21_{b1}, 21_{b2}, 21_{b3} est mise en oeuvre par voie filaire.

Une base de données 45 est stockée dans la mémoire 44 du dispositif de traitement. Dans cette base de données 45, pour chaque câble respectivement 20ₐ₁, 20ₐ₂, 20ₐ₃, 20_{b1}, 20_{b2}, 20_{b3} un identifiant du câble est mis en correspondance avec un identifiant du capteur respectivement 21ₐ₁, 21ₐ₂, 21ₐ₃, 21_{b1}, 21_{b2}, 21_{b3} qui lui est associé et qui mesure le courant circulant dans le câble.

Les étapes 101 à 105 suivantes sont alors réitérées pour chacun des neufs compteurs 30_{a_1}, 30_{a_2}, 30_{a_3}, 30_{a_4}, 30_{a_5}, 30_{b_1}, 30_{b_2}, 30_{b_3}, 30_{b_4}, considérés successivement.

Par exemple, le premier compteur considéré est le compteur 30_{a_1} dans le point consommateur 10_{a_1}.

Dans une étape 101, le dispositif de traitement 40 prépare par l'intermédiaire de son microcontrôleur 43 et de sa mémoire 44, un message commandant d'effectuer une séquence déterminée de déconnexions/connexions à la charge 33_{a_1} connectée au compteur considéré dans le point consommateur associé. Puis il transmet ce message à destination du compteur considéré, ici le compteur 30_{a_1}, par l'intermédiaire de son module d'émission/réception CPL 42.

La séquence déterminée est par exemple « 0101 » (où « 0 » indique une déconnexion et « 1 » indique une connexion). De façon générale, les étapes successives commandées sont au nombre de trois ou plus.

Dans un mode de réalisation, ce message est envoyé en période de forte consommation de courant (ici le courant Iₐ₁) transitant dans le compteur considéré. Cet état peut être déterminé d'après les relevés périodiques reçus par le dispositif de traitement 40 en provenance du compteur considéré.

Dans un mode de réalisation, la commande indique au compteur 30_{a_1} un temps T₀ auquel doit débuter l'exécution de la séquence.

Dans une étape 102, le dispositif de traitement 40 envoie aux capteurs de courant 21ₐ₁, 21ₐ₂, 21ₐ₃, 21_{b1}, 21_{b2}, 21_{b3} disposés sur les câbles au départ du tableau T₁, une commande, par les moyens de communication radiofréquence, pour effectuer des mesures de courant. Dans un mode de réalisation, cette commande indique la séquence déterminée de déconnexions/connexions transmise au compteur 30_{a_1} et en outre une référence temporelle déterminée (par exemple temps T₀ et/ou plage temporelle encadrant T₀ et la durée estimée pour la réalisation de la séquence) pendant laquelle effectuer ces mesures, ainsi que la séquence déterminée.

Dans un mode de réalisation, la commande aux capteurs de courant indique en outre une fréquence de mesure à appliquer par les capteurs pendant la période de mesure.

On notera que cette étape 102 peut être antérieure à l'étape 101 ou simultanée.

La plage temporelle est par exemple d'une durée égale au temps estimé nécessaire, augmenté d'une marge, pour que le compteur considéré effectue la séquence de connexions/déconnexions.

Dans une étape 103 ultérieure à l'étape 102, le compteur considéré, ici le compteur 30_{a_1}, suite à la réception du message de commande CPL, exécute les opérations de connexions/déconnexions à la charge 33_{a_1} conformément à la séquence de commande reçue.

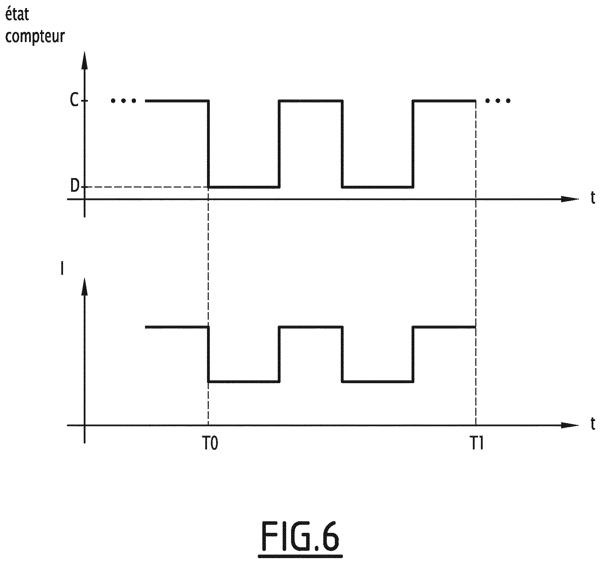

Comme illustré sur le graphe du haut de la figure 6 comportant en abscisse le temps et en ordonné l'état du compteur 30_{a_1} entre l'état « C » de connexion à la charge 33ₐ et l'état « D » de déconnexion à la charge, il se déconnecte à l'instant T₀, puis se reconnecte, ensuite se déconnecte avant de se reconnecter. La séquence se termine à l'instant T₁.

Dans le mode de réalisation considéré, chaque état de connexion ou déconnexion indiqué dans la séquence dure le temps nécessaire au compteur 30_{a_1} pour enchaîner ces deux états, et est fonction notamment de l'horloge pilotant le microcontrôleur 32_{a_1} et du temps de réponse du commutateur 36_{a_1}.

Dans un autre mode de réalisation, la commande au compteur et la commande de mesure aux capteurs indiquent en outre une durée des états successifs de connexion ou déconnexion.

Dans un autre mode de réalisation, le concentrateur 40 envoie plusieurs commandes successives, chacune avec seulement un ordre de connexion ou de déconnexion, le temps de maintien de chaque état étant alors fonction du temps entre deux commandes successives.

Lorsque le compteur 30_{a_1} passe dans l'état déconnecté depuis un état connecté, la charge 33_{a_1} ne consomme plus de courant, l'intensité du courant I_{a_1} circulant dans le câble varie, en diminuant d'une amplitude correspondant à ce qui était consommé par la charge 33_{a_1} juste avant la déconnexion. Et inversement, lorsque le compteur 30_{a_1} passe dans l'état connecté depuis un état déconnecté, la charge 33_{a_1} consomme alors à nouveau du courant, l'intensité du courant I_{a_1} circulant dans le câble varie, en augmentant d'une amplitude correspondant à ce qui est en train d'être consommé par la charge 33_{a_1}.

Un profil des variations d'intensité du courant transitant dans le câble relié au compteur 30_{a_1} correspondant à la séquence de connexion « 0101 » commandée est représenté en bas de la figure 6.

En parallèle de ces opérations de connexions/déconnexions, l'élément de mesure de courant dans chaque capteur de courant 21ₐ₁, 21ₐ₂, 21ₐ₃, 21_{b1}, 21_{b2}, 21_{b3} effectue des mesures successives de l'intensité du courant Iₐ₁, Ia₂, Ia₃, I_{b1}, I_{b2}, I_{b3} circulant dans le câble respectivement associé conformément à la commande de mesure transmise par le dispositif de traitement 40. Ces mesures successives sont ensuite fournies au microcontrôleur du capteur de courant.

Le microcontrôleur d'un capteur de courant est adapté pour comparer un profil de variation de courant dans le câble, déterminé en fonction de ses mesures à un profil-type qu'il détermine en fonction de la séquence transmise par le dispositif de traitement 40.

Le profil type lui est transmis par le dispositif de traitement 40 ou est élaboré par le capteur de courant lui-même à partir de la séquence de connexions/déconnexions et des temps de maintien.

Lorsque le microcontrôleur d'un capteur de courant déduit de sa comparaison que le profil de variation de courant dans le câble correspond au profil-type, il transmet un message, par l'intermédiaire de ses moyens d'émission/réception radiofréquence, à destination du dispositif de traitement 40 comportant l'identifiant du capteur de courant. Ce message indique que le capteur de courant a détecté des variations de courant correspondant à la séquence et qu'il est en conséquence sélectionnable en tant que capteur de courant se trouvant sur le câble d'alimentation électrique du compteur venant d'effectuer la séquence commandée. Dans un mode de réalisation, le message comporte en outre les mesures successivement effectuées par le capteur de courant. Dans le cas considéré, c'est le capteur 21ₐ₁ qui transmet un tel message.

On notera que dans le cas considéré, le profil-type correspond à une séquence correspondant à un passage à un état bas maintenu pendant un temps de maintien déterminé, suivi d'un passage à un état haut pendant un temps de maintien déterminé, lui-même suivi d'un passage à un état bas pendant un temps de maintien déterminé, suivi enfin suivi d'un nouveau passage à un état haut pendant un temps de maintien déterminé. Les amplitudes des états haut et bas ne sont pas a priori connues. Ce qui est connu a priori et caractéristique du profil-type est le nombre d'états haut/bas successifs et le temps de maintien des états.

Dans une étape 105, le dispositif de courant 40, suite à la réception du message reçu du capteur de courant qui s'est déclaré sélectionnable, ici le capteur de courant 21ₐ₁, met à jour la table de correspondance 45 en faisant correspondre l'identifiant du compteur de courant sélectionné pour l'itération courante des étapes 101 à 105, ici le compteur de courant 30_{a_1}, à l'identifiant du capteur de courant sélectionnable, ici le capteur de courant 21ₐ₁, et donc à l'identifiant du câble 20ₐ₁ sur lequel est disposé le capteur de courant.

Lorsque plusieurs capteurs de courant se sont déclarés « sélectionnables » suite à la réalisation d'une séquence de connexions/déconnexions, suivant les modes de réalisation, le dispositif de courant commande une nouvelle séquence de connexions/déconnexions au compteur considéré, ou bien détermine, en fonction des mesures transmises par les différents capteurs de courant, celui qui sera in fine sélectionné, ou détermine que plusieurs sont sélectionnables (notamment lorsqu'un compteur est un compteur opérant sur plus d'une phase, et que les capteurs sélectionnables correspondent à des phases distinctes d'un même départ triphasé).

Une fois la base de données 45 renseignée à l'étape 105, le processus est réitéré en sélectionnant un autre compteur de courant et en réitérant les étapes 101 à 105 pour cet autre compteur considéré.

On notera qu'il est nécessaire que la fréquence de mesure de l'élément de mesure du courant soit supérieure ou égale à la fréquence de commutation entre les états connecté et déconnecté du compteur de courant.

Ainsi la présente invention permet de déterminer à quel départ de câble au niveau d'un poste MT/BT 2 correspond un point consommateur, ce qui est très utile lorsque la structure et le cheminement de la portion de câble intermédiaire n'est pas connue.

Dans le mode de réalisation décrit ci-dessus, ce sont les capteurs de courant qui effectuent la comparaison entre les variations de courant mesurées sur leur câble respectif et un profil type correspondant à la séquence de connexions/déconnexions déterminée.

Dans un autre mode de réalisation, les capteurs de courant ou au moins certains d'entre eux ne font pas cette comparaison, mais envoient leurs mesures, éventuellement après avoir effectué quelques prétraitements, au dispositif de traitement 40 qui se charge alors de la comparaison et de la sélection d'un capteur de courant associé au même câble que le compteur de courant considéré.

Dans un mode de réalisation, la séquence déterminée de connexions/déconnexions commandée par le module de traitement est la même pour tous les compteurs considérés.

Dans un autre mode de réalisation, cette séquence est différente en fonction des compteurs, et constitue donc une signature donnée au compteur par le dispositif de traitement.

Dans un autre mode de réalisation, le message de transmission de la commande au compteur ne comporte pas les éléments de définition de la séquence (par exemple « 0101 »), les éléments de définition de la séquence étant préalablement connus du compteur et stockés dans sa mémoire.

Dans un mode de réalisation, les actions de connexions/déconnexion peuvent être effectuées par le compteur par rapport à une charge partielle uniquement et non par rapport à la charge totale du consommateur. Dans ce cas, le commutateur du compteur est adapté pour connecter/déconnecter spécifiquement cette charge partielle au câble d'alimentation.

Dans un mode de réalisation, le passage entre les états connectés et déconnectés est commandé par pilotage direct de la connexion de la charge ou d'une des charges , par CPL, directement depuis le dispositif de traitement, plutôt que par pilotage d'un compteur.

Dans un tel mode de réalisation, la commutation de la charge est par exemple réalisée par un simple dispositif de commutation doté d'un module d'émission/réception CPL placé au niveau du point consommateur entre le câble d'alimentation et la charge considérée et adapté pour effectuer des opérations de connexion/déconnexion à la charge en fonction de commandes CPL transmises par le dispositif de traitement. Comme on le voit, l'invention peut donc être mise en oeuvre indépendamment d'un compteur.

Dans un autre mode de réalisation, qui peut être mis en oeuvre notamment lorsque les compteurs ne sont pas adaptés pour passer rapidement d'un état de connexion à un état de déconnexion (par exemple, pour des temps de basculement entre ces deux états supérieurs à 100 ms), on considère que l'on connaît à chaque instant la puissance consommée par la charge réelle du consommateur à partir des relevés de consommation transmis par voie CPL, ou on suppose connue la puissance d'une charge pilotable en aval de ce compteur. Cette charge pilotage peut être une charge annexe qui n'est alimentée que pendant le procédé de localisation selon l'invention, ou est une charge partielle sélectionnée de la charge réelle du consommateur. Le dispositif de traitement 40 transmet un message à tous les capteurs de courant fournissant la valeur connue du courant consommé par le point consommateur ou par la charge pilotable annexe/partielle sélectionnée et l'identification d'un instant T₀.

Et le dispositif de traitement 40 transmet à destination d'un point consommateur sélectionné (ou d'un compteur ou d'un commutateur de ce point consommateur) une commande de déconnecter à la date T₀ la charge totale ou la charge partielle ou encore une commande de connecter la charge annexe.

Dans une étape similaire à l'étape 104 décrite similairement, suite au message qui leur a été transmis par le dispositif de traitement 40, tous les capteurs de courant vont mesurer le courant et rechercher une variation d'intensité d'amplitude prédéterminée à une date connue D.

L'amplitude est prédéterminée en fonction de la consommation connue de la charge totale, partielle ou annexe devant être connectée ou déconnectée conformément à la commande.

Les capteurs vont rechercher cet événement pendant un temps donné autour de l'instant T₀ (exemple : une seconde avant et après T₀).

Au bout de quelques secondes après l'instant T₀, la charge commandée est remise dans son état initial.

Lorsqu'un capteur a détecté la variation d'amplitude pendant la période de 2 s autour de l'instant T₀, il envoie un message le signalant au dispositif de traitement avec les identifiants du capteur ou du câble associé au capteur. Le dispositif de traitement 40 peut donc mettre en correspondance dans la base de données le point consommateur ou compteur sélectionné et l'identifiant du câble.

Si aucun capteur n'a détecté l'événement (par exemple parce que la charge partielle était déjà déconnectée ou non utilisée), ce processus est réitéré pour ce même compteur sélectionné par exemple une heure plus tard.

Si deux capteurs détectent un même événement, par exemple parce qu'une autre charge similaire avait été coupée pendant les deux secondes de test autour de la date T₀, on réitère également le test.

Ces étapes sont réitérées en sélectionnant successivement tous les points consommateurs, de manière à renseigner la base de données 45 pour tous les compteurs/points consommateurs.

Dans un mode de réalisation, lorsqu'un point consommateur comporte plusieurs compteurs, par exemple, un compteur par phase, suivant les modes de réalisation, une commande spécifique de connexion(s) et/ou déconnexion(s) de charge est transmise par le dispositif de traitement 40 pour chaque compteur. Dans un autre mode de réalisation, une commande unique est transmise au point consommateur pour piloter une opération, de connexion(s) et/ou déconnexion(s) de charge sur chaque câble associé à chaque phase, de façon synchrone ou non.

## Revendications

1. Procédé de localisation de points consommateurs dans un système de distribution de courant électrique (1) depuis un noeud central (N) à destination des points consommateurs de courant (10_{a_1}, 10_{b_1}) associés chacun à au moins une charge électrique (33ⱼ), des câbles de courant respectifs (20ₐ₁, 20_{b1}) connectant chaque point consommateur au noeud central, le système de distribution comprenant un module de traitement (40) ; et les points consommateurs et le module de traitement (40) étant dotés de premiers moyens de télécommunication (31, 42) ;
ledit procédé étant **caractérisé en ce qu'**il comprend les étapes suivantes, suite à l'installation sur les câbles, de capteurs de courant (21ₐ₁, 21_{b1}), chaque capteur de courant étant adapté pour mesurer le courant circulant dans un câble respectif associé;
i/ sélection par le module de traitement (40) d'un point consommateur et transmission par le module de traitement audit point consommateur sélectionné par les premiers moyens de télécommunication, d'une commande d'au moins une opération de connexion(s) et/ou déconnexion(s) du système de distribution à une charge électrique associée au point consommateur sélectionné ;
ii/ mise en oeuvre au niveau du point consommateur sélectionné, sur réception de ladite commande, de l'opération de connexion(s) et/ou déconnexion(s) à ladite charge électrique ;
iii/ sélection parmi les capteurs de courant (21ₐ₁, 21_{b1}), en fonction au moins de mesures respectives effectuées par certains au moins desdits capteurs de courant pendant la mise en oeuvre de ladite commande, et en fonction en outre d'un profil-type de variation de courant déterminé en fonction de l'opération commandée, d'au moins un capteur de courant en tant que capteur de courant associé à un câble connectant le noeud central au point consommateur sélectionné.

2. Procédé de localisation de points consommateurs selon la revendication 1, selon lequel on réitère les étapes i/ à iii/ en sélectionnant successivement des points consommateurs distincts (10_{a_1}, 10_{b_1}).

3. Procédé de localisation de points consommateurs selon l'une quelconque des revendications 1 à 2, comprenant en outre l'étape suivante, suite à la sélection d'un capteur de courant à l'étape iii/ :
iv/ on indique, dans une table de correspondance (45) stockée dans des moyens de mémorisation (44) du système de distribution du courant électrique (1), une correspondance entre :
- un identifiant du câble (20ₐ₁) associé au capteur sélectionné (21ₐ₁) ; et
- un identifiant du point consommateur (10_{a_1}) sélectionné.

4. Procédé de localisation de points consommateurs selon l'une des revendications précédentes, selon lequel l'opération de connexion(s) et/ou déconnexion(s) est relative à une opération, au niveau du point consommateur sélectionné, de connexion(s) et/ou déconnexion(s) d'une charge électrique (33ⱼ) dont la puissance est préalablement connue ou estimée connue, et le profil-type de variation de courant déterminé comprend une variation d'amplitude de courant déterminée en fonction de ladite puissance connue ou estimée.

5. Procédé de localisation de points consommateurs selon l'une des revendications précédentes, selon lequel, l'opération de connexion et/ou déconnexion est relative à une séquence déterminée de trois ou plus étapes de connexion(s) et/ou déconnexion(s) successives d'une charge électrique (33ⱼ) dans le point consommateur sélectionné.

6. Procédé de localisation de points consommateurs selon la revendication 5, selon lequel la commande comporte des éléments de définition de la séquence, des séquences différentes étant commandées à des points consommateurs distincts.

7. Procédé de localisation de points consommateurs selon l'une des revendications précédentes, selon lequel le point consommateur (10ⱼ) comprend un commutateur (36ⱼ) disposé entre la charge électrique (33ⱼ) et le câble connectant ledit point consommateur, ledit commutateur étant adapté pour mettre en oeuvre la commande.

8. Procédé de localisation de points consommateurs selon l'une des revendications précédentes, selon lequel un compteur de courant respectif (30ⱼ) au niveau d'un point consommateur (10ⱼ) étant adapté pour s'incrémenter en fonction du courant consommé par ledit point consommateur associé, transmet au module de traitement (40) via les premiers moyens de communications des relevés de consommation électrique par ledit point consommateur associé au compteur.

9. Procédé de localisation de points consommateurs selon la revendication précédente et la revendication 4, selon laquelle la puissance connue ou estimée est déterminée en fonction d'au moins un desdits relevés reçus par le module de traitement.

10. Procédé de localisation de points consommateurs selon l'une des revendications précédentes, selon lequel la technologie des premiers moyens de communication (31ⱼ, 41) est de type « courants porteurs en ligne ».

11. Procédé de localisation de points consommateurs selon l'une des revendications précédentes, selon lequel le module de traitement (40) et les capteurs (21ₐ₁, 21_{b1}) étant dotés de seconds moyens de communication (23ₖ, 41) :
a. le profil-type de variation de courant déterminé est transmis par le module de traitement aux capteurs de courant via lesdits seconds moyens de télécommunication ;
b. chaque capteur de courant détermine en fonction dudit profil-type et d'au moins une mesure effectuée par ledit capteur si ledit capteur est sélectionnable ;
c. si ledit capteur est déterminé comme sélectionnable, il en informe le module de traitement via les seconds moyens de télécommunication.

12. Dispositif de traitement (40) d'un système de distribution de courant électrique (1) depuis un noeud central (T) à destination de points consommateurs de courant (10_{a_1}, 10_{b_1}) connectés audit noeud central par des câbles de courant respectifs (20ₐ₁, 20_{b1}), des capteurs de courant (21ₐ₁, 21_{b1}) étant adaptés pour mesurer le courant circulant dans les câbles, chaque capteur étant associé à un câble respectif, ledit dispositif de traitement étant doté de premiers moyens de télécommunication (42) avec les points consommateurs et étant **caractérisé en ce qu'**il est adapté pour :
a/ sélectionner un point consommateur et transmettre par les premiers moyens de télécommunication audit point consommateur sélectionné, une commande d'au moins une opération de connexion(s) et/ou déconnexion(s) du système de distribution à une charge électrique associée au point consommateur sélectionné ;
b/ sélectionner parmi les capteurs de courant, en fonction au moins de mesures respectives effectuées par certains au moins desdits capteurs de courant pendant la mise en oeuvre de ladite commande, et en fonction en outre d'un profil-type de variation de courant déterminé en fonction de l'opération commandée, au moins un capteur de courant en tant que capteur de courant associé à un câble connectant le noeud central au point consommateur sélectionné.

13. Dispositif de traitement (40) selon la revendication 12, adapté pour sélectionner successivement des point consommateurs distincts (10_{a_1}, 10_{b_1}), et adapté pour effectuer les opérations a/ et b/ pour chaque point consommateur successivement sélectionné.

14. Dispositif de traitement (40) selon la revendication 12 ou 13, adapté pour renseigner une table de correspondance (45) en indiquant une correspondance entre :
a. un identifiant du câble (20ₐ₁) associé au capteur sélectionné (21ₐ) ; et
b. un identifiant du point consommateur sélectionné (10_{a_1}).

15. Dispositif de traitement (40) selon l'une des revendications 12 à 14, dans lequel l'opération de connexion(s) et/ou déconnexion(s) est relative à une opération de connexion(s) et/ou déconnexion(s) d'une charge électrique dans le point consommateur sélectionné dont la puissance est stockée dans une mémoire du dispositif de traitement, ledit dispositif de traitement étant adapté pour déterminer un profil-type de variation de courant déterminé comprenant une variation d'amplitude de courant fonction de ladite puissance connue.

16. Dispositif de traitement (40) selon l'une des revendications 12 à 15, dans lequel l'opération de connexion(s) et/ou déconnexion(s) commandée est relative à une séquence déterminée de trois ou plus étapes de connexion(s) et/ou déconnexion(s) successives d'une charge électrique dans le point consommateur sélectionné.

17. Dispositif de traitement (40) selon la revendication 16, adapté pour transmettre une commande comportant des éléments de définition de la séquence, des séquences différentes étant commandées à des points consommateurs distincts (10_{a_1}, 10_{b_1}).

18. Dispositif de traitement (40) selon l'une quelconque des revendications 12 à 17, adapté pour recevoir, via les premiers moyens de communications, des relevés, transmis par des compteurs, de consommation électrique par les points consommateurs (10_{a_1}, 10_{b_1}) associés respectivement aux compteurs.

19. Dispositif de traitement (40) selon la revendication 18 et la revendication 15, adapté pour déterminer ladite puissance en fonction d'au moins un desdits relevés reçus en provenance du point consommateur sélectionné.

20. Dispositif de traitement (40) selon l'une des revendications 12 à 19, dans lequel la technologie des premiers moyens de communication (31ⱼ, 42) est de type « courants porteurs en ligne ».

21. Dispositif de traitement (40) selon l'une des revendications 12 à 20, comprenant des seconds moyens de communication (23ₖ, 41) pour communiquer avec les capteurs (21ₐ₁, 21_{b1}) et adapté pour déterminer le profil-type de variation de courant en fonction de l'opération commandée, pour transmettre aux capteurs de courant, via les seconds moyens de communication, ledit profil-type de variation de courant déterminé et pour recevoir via lesdits seconds moyens de communication, en provenance d'au moins un des capteurs, une information selon laquelle ledit capteur est sélectionnable.

22. Capteur de courant électrique (21ₖ) adapté pour mesurer un courant électrique dans un câble de courant (20ₐ₁) et comprenant des moyens de télécommunications (23ₖ) et des moyens de traitement (24ₖ), ledit capteur de courant étant adapté pour recevoir d'un dispositif extérieur (40) via les moyens de télécommunication, un profil-type de variation de courant, les moyens de traitement étant adaptés pour déterminer en fonction au moins de mesures de courant si le courant circulant dans le câble correspond au profil -type reçu, et dans le cas positif pour le signaler au dispositif extérieur via les moyens de télécommunication.

## Patentansprüche

1. Verfahren zum Lokalisieren von Verbraucherpunkten in einem Verteilersystem (1) von elektrischem Strom von einem zentralen Knoten (N) zu den Verbraucherpunkten (10_{a_1}, 10_{b_1}), die jeweils mindestens einer elektrischen Last (33ⱼ) zugeordnet sind, wobei jeweilige Stromkabel (20ₐ₁, 20_{b1}) jeden Verbraucherpunkt mit dem zentralen Knoten verbindet, wobei das Verteilersystem ein Bearbeitungsmodul (40) umfasst; und die Verbrauchpunkte und das Bearbeitungsmodul (40) mit ersten Telekommunikationsmitteln (31, 42) versehen sind;
wobei das Verfahren **dadurch gekennzeichnet ist, dass** es die folgenden Schritte auf die Installation von Stromsensoren (21ₐ₁, 21_{b1}) an den Stromkabeln folgend umfasst, wobei jeder Stromsensor ausgebildet ist, den in einem jeweiligen zugeordneten Kabel fließenden Strom zu messen;
i/ Auswählen eines Verbraucherpunktes durch das Bearbeitungsmodul (40) und Senden eines Befehls für mindestens eine Operation des Verbindens und/oder des Trennens des Verteilersystems mit bzw. von einer dem ausgewählten Verbrauchpunkt zugeordneten elektrischen Last von dem Bearbeitungsmodul an den ausgewählten Verbraucherpunkt über die ersten Telekommunikationsmittel;
ii/ Durchführen der Operation des Verbindens und/oder Trennens mit bzw. von der elektrischen Last an dem ausgewählten Verbraucherpunkt nach Empfang des Befehls;
iii/ Auswählen aus den Stromsensoren (21ₐ₁, 21_{b1}) mindestens eines Stromsensors als Stromsensor, der einem den zentralen Knoten mit den ausgewählten Verbraucherpunkt verbindenden Kabel zugeordnet ist, abhängig von mindestens jeweiligen Messungen, die von mindestens einigen der Stromsensoren während des Durchführens des Befehls ausgeführt wurden, und außerdem abhängig von einem bestimmten Profil-Typ der Veränderung des Stroms, abhängig von der befohlenen Operation.

2. Verfahren zum Lokalisieren von Verbraucherpunkten nach Anspruch 1, nach dem die Schritte i/ bis iii/ wiederholt werden, wobei aufeinanderfolgend bestimmte Verbraucherpunkte (10_{a_1}, 10_{b_1}) gewählt werden.

3. Verfahren zum Lokalisieren von Verbraucherpunkten nach einem beliebigen der Ansprüche 1 bis 2, außerdem den folgenden Schritt auf die Auswahl des Stromsensors im Schritt iii/ folgend umfassend:
iv/ Aufzeigen einer Korrespondenz zwischen
- einem Kennzeichen des dem ausgewählten Sensor (21ₐ₁) zugeordneten Kabels (20ₐ₁); und
- einem Kennzeichen des ausgewählten Verbraucherpunkts (10_{a_1})
in einer Korrespondenztabelle (45), die in Speichermitteln (44) des Verteilersystems (1) des elektrischen Stroms gespeichert sind.

4. Verfahren zum Lokalisieren von Verbraucherpunkten nach einem der vorhergehenden Ansprüche, nach dem die Operation des Verbindens und/oder des Trennens sich auf eine Operation des Verbindens und/oder Trennens einer elektrischen Last (33ⱼ) in dem ausgewählten Verbraucherpunkt bezieht, deren Leistung vorher bekannt ist oder als bekannt geschätzt wird, und der bestimmte Profil-Typ der Veränderung des Stroms eine Änderung der Amplitude des Stroms umfasst, die abhängig von der bekannten oder geschätzten Leistung bestimmt wird.

5. Verfahren zum Lokalisieren von Verbraucherpunkten nach einem der vorhergehenden Ansprüche, bei dem sich die Operation des Verbindens und/oder des Trennens auf eine bestimmte Sequenz von drei oder mehr Schritten des aufeinanderfolgenden Verbindens und/oder Trennens mit bzw. von einer elektrischen Last (33ⱼ) in dem ausgewählten Verbraucherpunkt bezieht.

6. Verfahren zum Lokalisieren von Verbraucherpunkten nach Anspruch 5, nach dem der Befehl Elemente der Definition der Sequenz aufweist, wobei unterschiedliche Sequenzen für unterschiedliche Verbraucherpunkte gesteuert werden.

7. Verfahren zum Lokalisieren von Verbraucherpunkten nach einem der vorhergehenden Ansprüche, nach dem der Verbraucherpunkt (10ⱼ) einen Schalter (36ⱼ) umfasst, der zwischen der elektrischen Last (33ⱼ) und dem den Verbraucherpunkt verbindenden Kabel angeordnet ist, wobei der Schalter ausgebildet ist, den Befehl auszuführen.

8. Verfahren zum Lokalisieren von Verbraucherpunkten nach einem der vorhergehenden Ansprüche, nach dem ein jeweiliger Stromzähler (30ⱼ) in einem Verbraucherpunkt (10ⱼ) ausgebildet ist, sich abhängig von dem Strom, der von dem zugeordneten Verbraucherpunkt verbraucht wird, zu erhöhen und über die ersten Kommunikationsmittel an das Bearbeitungsmodul (40) Aufzeichnungen des elektrischen Verbrauchs durch den dem Zähler zugeordneten Verbraucherpunkt zu senden.

9. Verfahren zum Lokalisieren von Verbraucherpunkten nach dem der vorhergehenden Anspruch und Anspruch 4, nach dem die bekannte oder geschätzte Leistung abhängig von mindestens den Aufzeichnungen bestimmt wird, die von dem Bearbeitungsmodul empfangen werden.

10. Verfahren zum Lokalisieren von Verbraucherpunkten nach einem der vorhergehenden Ansprüche, nach dem die Technologie der ersten Kommunikationsmittel (31ⱼ, 41) des Typs "Trägerfrequenzanlage" ist.

11. Verfahren zum Lokalisieren von Verbraucherpunkten nach einem der vorhergehenden Ansprüche, nach dem das Bearbeitungsmodul (40) und die Sensoren (21ₐ₁, 21_{b1}) mit zweiten Kommunikationsmitteln (23ₖ, 41) versehen sind:
a. der bestimmte Profil-Typ der Veränderung des Stroms von dem Bearbeitungsmodul an die Stromsensoren über die zweiten Telekommunikationsmittel gesendet werden;
b. jeder Stromsensor abhängig von dem Profil-Typ und mindestens einer von dem Sensor ausgeführten Messung bestimmt, ob der Sensor auswählbar ist;
c. wenn der Sensor als auswählbar bestimmt wird, er das Bearbeitungsmodul über die zweiten Telekommunikationsmittel darüber informiert.

12. Vorrichtung (40) zur Bearbeitung eines Verteilersystems von elektrischem Strom von einem zentralen Knoten (T) an Stromverbraucherpunkte (10_{a_1}, 10_{b_1}), die über jeweilige Stromkabel (20ₐ₁, 20_{b1}) mit dem zentralen Knoten verbunden sind, wobei Stromsensoren (21ₐ₁, 21_{b1}) angepasst sind, den in den Kabeln fließenden Strom zu messen und jeder Sensor einem jeweiligen Kabel zugeordnet ist, wobei die Bearbeitungsvorrichtung mit ersten Telekommunikationsmitteln (42) mit den Verbraucherpunkten ausgestattet ist und **dadurch gekennzeichnet ist, dass** sie ausgebildet ist zum:
a/ Auswählen eines Verbraucherpunkts und Senden an den ausgewählten Verbraucherpunkt eines Befehls für mindestens eine Operation des Verbindens und/oder des Trennens des Verteilersystems mit bzw. von einer dem ausgewählten Verbraucherpunkt zugeordneten elektrischen Last durch die ersten Kommunikationsmittel;
b/ Auswählen mindestens eines Stromsensors aus den Stromsensoren als Stromsensor, der einem den zentralen Knoten mit dem ausgewählten Verbraucherpunkt verbindenden Kabel zugeordnet ist, abhängig von mindestens jeweiligen Messungen, die von mindestens einigen der Stromsensoren während des Durchführens des Befehls ausgeführt wurden, und außerdem abhängig von einem bestimmten Profil/Typ der Veränderung des Stroms abhängig von der befohlenen Operation.

13. Bearbeitungsvorrichtung (40) nach Anspruch 12, ausgebildet zum aufeinanderfolgenden Auswählen von bestimmten Verbraucherpunkten (10_{a_1}, 10_{b_1}) und ausgebildet zum Durchführen der Operationen a/ und b/für jeden aufeinanderfolgend ausgewählten Verbraucherpunkt.

14. Bearbeitungsvorrichtung (40) nach dem Anspruch 12 oder 13, ausgebildet zum Mitteilen einer Korrespondenztabelle (45), wobei eine Korrespondenz zwischen:
a. einem Kennzeichen des Kabels (20ₐ₁), das dem ausgewählten Sensor (21ₐ) zugeordnet ist; und
b. einem Kennzeichen eines ausgewählten Verbraucherpunkts (10_{a_1}) angegeben wird.

15. Bearbeitungsvorrichtung (40) nach einem der Ansprüche 12 bis 14, bei der die Operation des Verbindens und/oder des Trennens sich auf eine Operation des Verbindens und/oder Trennens einer elektrischen Last in dem ausgewählten Verbraucherpunkt bezieht, deren Leistung in einem Speicher der Bearbeitungsvorrichtung gespeichert ist, wobei die Bearbeitungsvorrichtung ausgebildet ist, einen bestimmten Profil-Typ der Veränderung des Stroms, der eine Änderung der Amplitude des Stroms abhängig von der bekannten Leistung umfasst, zu bestimmen.

16. Bearbeitungsvorrichtung (40) nach einem der Ansprüche 12 bis 15, bei der sich die Operation des Verbindens und/oder Trennens auf eine bestimmte Sequenz von drei oder mehreren Schritten des aufeinanderfolgenden Verbindens und/oder Trennens mit bzw. von einer elektrischen Last in dem ausgewählten Verbraucherpunkt bezieht.

17. Bearbeitungsvorrichtung (40) nach Anspruch 16, ausgebildet zum Senden eines Befehls, der Elemente der Definition der Sequenz aufweist, wobei unterschiedliche Sequenzen für unterschiedliche Verbraucherpunkte gesteuert werden (10_{a_1}, 10_{b_1}).

18. Bearbeitungsvorrichtung (40) nach einem beliebigen der Ansprüche 12 bis 17, ausgebildet zum Empfangen von Aufzeichnungen eines elektrischen Verbrauchs der Verbraucherpunkte (10_{a_1}, 10_{b_1}), die jeweils Stromzählern zugeordnet sind, gesendet von den Stromzählern über die ersten Kommunikationsmittel.

19. Bearbeitungsvorrichtung (40) nach Anspruch 18 und Anspruch 15, ausgebildet zum Bestimmen der Leistung abhängig von mindestens einer der Aufzeichnungen, die von dem ausgewählten Verbraucherpunkt empfangen werden.

20. Bearbeitungsvorrichtung (40) nach einem der Ansprüche 12 bis 19, bei der die Technologie der ersten Kommunikationsmittel (31ⱼ, 42) des Typs "Trägerfrequenzanlage" ist.

21. Bearbeitungsvorrichtung (40) nach einem der Ansprüche 12 bis 20, zweite Kommunikationsmittel (23ₖ, 41) zum Kommunizieren mit den Sensoren (21ₐ₁, 21_{b1}) umfassend und angepasst zum Bestimmen des Profil-Typs der Veränderung des Stroms, abhängig von der befohlenen Operation, um an die Stromsensoren über die zweiten Kommunikationsmittel den bestimmten Profil-Typ der Veränderung des Stroms zu senden und um über die zweiten Kommunikationsmittel von mindestens einem der Sensoren kommend eine Information zu empfangen, nach der der Sensor auswählbar ist.

22. Stromsensor (21ₖ), ausgebildet zum Messen eines elektrischen Stroms in einem Stromkabel (20ₐ₁) und Telekommunikationsmittel (23ₖ) und Bearbeitungsmittel (24ₖ) umfassend, wobei der Stromsensor ausgebildet ist, von einer äußeren Vorrichtung (40) über die Telekommunikationsmittel einen Profil-Typ der Veränderung des Stroms zu empfangen, wobei die Bearbeitungsmittel ausgebildet sind, mindestens abhängig von Strommessungen zu bestimmen, ob der in dem Kabel fließende Strom dem empfangenen Profil-Typ entspricht und im positiven Fall dieses an die äußere Vorrichtung über die Telekommunikationsmittel zu melden.

## Claims

1. A method for locating current-consuming points in a current distribution system (1) from a central node (N) and intended for current-consuming points (10_{a_1}, 10_{b_1}) each associated with at least one electric charge (33ⱼ), respective current cables (20ₐ₁, 20_{b1}) connecting each consumer point to the central node, the distribution system comprising a processing module (40); and the consumer points and the processing module (40) being equipped with first telecommunications means (31, 42);
said method being **characterized in that** it comprises the following steps, following the installation of current sensors (21ₐ₁, 21_{b1}) on the cables, each current sensor being adapted to measure the current circulating in a respective associated cable;
i/ selection, by the processing module (40), of a consumer point, and transmission by the processing module to said selected consumer point by the first telecommunications means, of a command for at least one connection and/or disconnection operation of the distribution system to an electric charge associated with the selected consumer point;
ii/ implementation, at the selected consumer point, upon reception of said command, of the connection and/or disconnection operation(s) to said electric charge;
iii/ selection among the current sensors (21ₐ₁, 21_{b1}), as a function at least of respective measurements done by at least some of said current sensors during the implementation of said command, and also as a function of a standard current variation profile determined as a function of the commanded operation, of at least one current sensor as current sensor associated with a cable connecting the central node to the selected consumer point.

2. The method for locating consumer points according to claim 1, wherein steps i/ to iii/ are reiterated by successively selecting distinct consumer points (10_{a_1}, 10_{b_1}).

3. The method for locating consumer points according to any one of claims 1 to 2, also comprising the following step, after the selection of a current sensor in step iii/:
iv/ one indicates, in a lookup table (45) stored in storage means (44) of the electrical current distribution system (1), a correspondence between:
- an identifier of the cable (20ₐ₁) associated with the selected sensor (21ₐ₁); and
- an identifier of the selected consumer point (10_{a_1}).

4. The method for locating consumer points according to any one of the preceding claims, wherein the connection and/or disconnection operation relates to an operation, at the selected consumer point, for connection(s) and/or disconnection(s) of an electric charge (33ⱼ) whereof the power is known or considered to be known beforehand, and the standard current variation profile determined comprises a current amplitude variation determined as a function of said known or estimated power.

5. The method for locating consumer points according to any one of the preceding claims, wherein the connection and/or disconnection operation relates to a predetermined sequence of three or more successive connection and/or disconnection steps of an electric charge (33ⱼ) in the selected consumer point.

6. The method for locating consumer points according to claim 5, wherein the command includes elements for defining the sequence, different sequences being commanded at separate consumer points.

7. The method for locating consumer points according to any one of the preceding claims, wherein the consumer point (10ⱼ) comprises a switch (36ⱼ) arranged between the electric charge (33ⱼ) and the cable connecting said consumer point, said switch being adapted to implement the command.

8. The method for locating consumer points according to any one of the preceding claims, wherein a respective current meter (30ⱼ) at a consumer point (10ⱼ) being adapted to be incremented as a function of the current consumed by said associated consumer point, sends the processing module (40), via the first communication means, readings of power consumption by said consumer point associated with the meter.

9. The method for locating consumer points according to the preceding claim and claim 4, wherein the known or estimated power is determined as a function of at least one of said readings received by the processing module.

10. The method for locating consumer points according to any one of the preceding claims, wherein the technology of the first communication means (31ⱼ, 41) is of the "power line communication" type.

11. The method for locating consumer points according to one of the preceding claims, wherein the processing module (40) and the sensors (21ₐ₁, 21_{b1}) being equipped with second communication means (23ₖ, 41):
a. the standard current variation profile determined is transmitted by the processing module to the current sensors via said second telecommunications means;
b. each current sensor determines, as a function of said standard profile and of at least one measurement done by said sensor, whether said sensor is able to be selected;
c. if said sensor is determined as being able to be selected, it informs the processing module thereof via the second telecommunications means.

12. A processing device (40) of an electrical current distribution system (1) from a central node (T) to current-consuming points (10_{a_1}, 10_{b_1}) connected to said central node by respective current cables (20ₐ₁, 20_{b1}),
current sensors (21ₐ₁, 21_{b1}) being adapted to measure the current circulating in the cables, each sensor being associated with a respective cable, said processing device being equipped with first telecommunications means (42) with the consumer points and being **characterized in that** it is suitable for:
a/ selecting a consumer point and transmitting, using the first telecommunications means to the selected consumer point, a command for at least one connection and/or disconnection operation of the distribution system to an electric charge associated with the selected consumer point;
b/ selecting, among the current sensors, as a function at least of respective measurements done by at least some of said current sensors during the implementation of said command, and also as a function of a standard current variation profile determined as a function of the command operation, at least one current sensor as current sensor associated with a cable connecting the central node to the selected consumer point.

13. The processing device (40) according to claim 12, suitable for successively selecting separate consumer points (10_{a_1}, 10_{b_1}), and suitable for performing operations a/ and b/ for each consumer point successively selected.

14. The processing device (40) according to claim 12 or 13, suitable for completing a lookup table (45) by indicating a correspondence between:
a. an identifier of the cable (20ₐ₁) associated with the selected sensor (21ₐ₁); and
b. an identifier of the selected consumer point (10_{a_1}).

15. The processing device (40) according to one of claims 12 to 14, wherein the connection and/or disconnection operation relates to an operation for connection(s) and/or disconnection(s) of an electric charge in the selected consumer point whereof the power is stored in a memory of the processing device, said processing device being suitable for determining a standard current variation profile determined comprising a current amplitude variation depending on said known power.

16. The processing device (40) according to one of claims 12 to 15, wherein the commanded connection/disconnection operation relates to a predetermined sequence of three or more successive connection and/or disconnection steps of an electric charge in the selected consumer point.

17. The processing device (40) according to claim 16, suitable for transmitting a command including elements defining the sequence, different sequences being commanded at separate consumer points (10_{a_1}, 10_{b_1}).

18. The processing device (40) according to any one of claims 12 to 17, suitable for receiving, via the first communication means, readings transmitted by meters of the power consumption by the consumer points (10_{a_1}, 10_{b_1}) respectively associated with the meters.

19. The processing device (40) according to claim 18 and claim 15, suitable for determining said power as a function of at least one of said readings received from the selected consumer point.

20. The processing device (40) according to one of claims 12 to 19, wherein the technology of the first communication means (31ⱼ, 42) is of the "power line communication" type.

21. The processing device (40) according to one of claims 12 to 20, comprising second communication means (23ₖ, 41) to communicate with the sensors (21ₐ₁, 21_{b1}) and suitable for determining the standard current variation profile as a function of the commanded operation, to transmit to the current sensors, via the second communication means, said determined standard current variation profile and for receiving, via said second communication means, from at least one of the sensors, information indicating that the sensor is able to be selected.

22. An electrical current sensor (21ₖ) suitable for measuring an electrical current in a current cable (20ₐ₁) and comprising telecommunications means (23ₖ) and processing means (24ₖ), said current sensor being adapted to receive, from an outside device (40) via the telecommunications means, a standard current variation profile, the processing means being adapted to determine, as a function at least of current measurements, whether the current circulating in the cable corresponds to the received standard profile, and in the affirmative, to signal that to the outside device using the telecommunications means.
